# DEMANDE DE BREVET EUROPEEN

(11) **EP 1 312 495 A1**
(43) Date de publication de la demande: **21.05.2003**
(21) Numéro de dépôt: 02356225.9
(22) Date de dépôt: 13.11.2002
(51) Int. Cl.: B60H 1/00, B60H 1/32, F04B 49/08

(54) **Dispositif de climatisation et véhicule à moteur ainsi équipé**

(30) Priorité: 15.11.2001 FR 0114773
(71) Demandeur: LBV, 69003 Lyon (FR)
(72) Inventeur: Verot, Laurence, 38280 Janneyrias (FR)
(74) Mandataire: Palix, Stéphane

(57) **Abrégé**

Un dispositif de climatisation comprend un circuit de fluide réfrigérant (2) présentant notamment un compresseur (3), le compresseur (3) étant mécaniquement entraîné par un moteur hydraulique (32), le moteur hydraulique (32) étant mis en rotation grâce à un circuit hydraulique principal sous-pression (33), le débit d'alimentation du moteur hydraulique (32) étant régulé en fonction de la pression régnant au sein du circuit hydraulique principal sous pression (33).

Le débit d'alimentation du moteur hydraulique (32) diminue lorsque la pression régnant au sein du circuit hydraulique principal sous pression (33) augmente au-delà d'une valeur de pression seuil, et le débit d'alimentation du moteur hydraulique (32) augmente lorsque la pression régnant au sein du circuit hydraulique principal sous pression (33) diminue en dessous d'une deuxième valeur de pression supérieure à la valeur de pression seuil.

## Description

La présente invention concerne un dispositif de climatisation. La présente invention concerne un véhicule à moteur équipé d'un dispositif de climatisation. La présente invention concerne également un engin de travaux publics équipé d'un dispositif de climatisation.

Il est bien connu que la climatisation améliore considérablement les ambiances et les conditions de travail. La climatisation entraîne de ce fait une diminution de la fatigue et de l'absentéisme, ainsi qu'une augmentation de l'activité et de la productivité. Par voie de conséquence, les utilisateurs de différents types de véhicules à moteur à combustion interne exigent de plus en plus la présence d'un groupe destiné à assurer la climatisation de la cabine. On peut considérer que si l'air est calme et que si la température des parois est proche de celle de l'air, la zone de confort correspond à une température d'air sensiblement comprise entre 23 °C et 26 °C.

Dans de nombreux véhicules à moteurs, par exemple des engins de travaux publics, le moteur à combustion internes permet d'entraîner plusieurs postes à fonctions principales d'utilisation, par exemple translation, outils par l'intermédiaire d'un circuit hydraulique principal sous pression. On estime que pendant 20 % du temps de travail, l'engin de travaux publics a besoin de toute la puissance disponible du moteur à combustion interne.

En outre, le moteur à combustion interne entraîne également et de manière directe le compresseur du dispositif de climatisation. Le compresseur se trouve généralement éloigné des autres éléments principaux de la climatisation que sont le condenseur et l'évaporateur. Cet éloignement augmente la longueur des tuyauteries de connexions et donc les pertes de charges. Les pertes de charges augmentent la puissance consommée.

### Etat de la technique

On connaît d'après le document US- 4.144.719 un dispositif de climatisation à circuit de fluide réfrigérant présentant notamment un compresseur. Le compresseur est mécaniquement entraîné par un moteur hydraulique. Le moteur hydraulique est mis en rotation grâce à un circuit hydraulique sous-pression.

On connaît d'après le document DE- 38.02.356 et le document JP- 61.060.314 un dispositif de climatisation dont le compresseur est mécaniquement entraîné par un moteur hydraulique. L'alimentation du moteur hydraulique en fluide hydraulique est régulée par thermostat ou par l'utilisateur lui-même.

L'inconvénient principal des dispositifs de climatisation de l'art antérieur est que l'entraînement de cette climatisation exige une quantité importante de puissance. Ceci est pénalisant pour les engins de petites tailles. Ceci donne une climatisation à fonctionnement devenant prioritaire au détriment des autres fonctions principales d'utilisation de l'engin.

On connaît également d'après le document WO- 00/ 23.292 un dispositif de climatisation dont l'entraînement du compresseur comprend un moyen de régulation par contrôle électrique et embrayage électromagnétique réagissant en fonction de la vitesse du moteur principal. Ce moyen de régulation permet de garder constant le couple absorbé par l'entraînement du compresseur et d'économiser la puissance des batteries ou d'économiser du carburant.

Cependant, ce principe ne permet pas de gérer la puissance consommée par la climatisation afin de libérer la puissance établie pour les fonctions principales du véhicule, mais permet seulement d'éliminer les variations de couple sur l'entraînement du compresseur.

On connaît également d'après le document DE- 43.37.210 un dispositif de climatisation avec un compresseur, un générateur et un ventilateur. Le compresseur, le générateur et le ventilateur sont mécaniquement chacun entraînés par un moteur hydraulique, les moteurs hydrauliques étant mis en rotation grâce à un circuit hydraulique sous-pression. Le débit d'alimentation des moteurs hydrauliques est régulé en fonction de la pression régnant au sein du circuit hydraulique sous pression.

Si une puissance très élevée, fonction de la température souhaitée, est nécessaire pour le moteur hydraulique du compresseur, une régulation va s'établir, jusqu'à ce que la pression suffisante au sein du circuit hydraulique sous pression s'ajuste pour le compresseur de la climatisation. De cette manière, la régulation du dispositif de climatisation va se faire transitoirement au détriment de l'entraînement du générateur et du ventilateur.

### Résumé de l'invention

Un premier but de l'invention est de concevoir une climatisation sur un véhicule à moteur qui ne nécessite pas une augmentation de la puissance du moteur principal. Un deuxième but de l'invention est de mettre au point un dispositif de climatisation entraîné par moteur hydraulique et présentant une puissance maîtrisée. Un troisième but de l'invention est de prévoir une déconnexion de la climatisation quand la puissance disponible n'est pas suffisante pour les fonctions principales d'utilisation, dans les phases d'utilisation de la puissance maximale du moteur à combustion interne. Un quatrième but de l'invention est de monter un dispositif de climatisation de faibles dimensions et permettant de réduire au maximum les tuyauteries et conduits de connexion des éléments de la climatisation, sur un véhicule à moteur et plus particulièrement sur un engin de travaux public.

Un dispositif de climatisation comprend un circuit de fluide réfrigérant présentant notamment un compresseur, le compresseur étant mécaniquement entraîné par un moteur hydraulique, le moteur hydraulique étant mis en rotation grâce à un circuit hydraulique principal sous-pression, le débit d'alimentation du moteur hydraulique étant régulé en fonction de la pression régnant au sein du circuit hydraulique principal sous pression.

Conformément à l'invention, le dispositif de climatisation est caractérisé en ce que le débit d'alimentation du moteur hydraulique diminue, lorsque la pression régnant au sein du circuit hydraulique principal sous pression augmente au-delà d'une valeur de pression seuil, et en ce que le débit d'alimentation du moteur hydraulique augmente lorsque la pression régnant au sein du circuit hydraulique principal sous pression diminue en dessous d'une deuxième valeur de pression supérieure à la valeur de pression seuil.

Ainsi, le débit d'alimentation, et par voie de conséquence la vitesse de rotation, du moteur hydraulique est régulé en fonction de la pression régnant au sein du circuit hydraulique principal sous pression. En d'autres termes, le dispositif de climatisation ralenti, puis s'arrête lorsque la pression du circuit hydraulique principal augmente, et donc lorsque la puissance est nécessaire pour les fonctions principales d'utilisation du véhicule. Et le dispositif de climatisation redémarre dès que la puissance est à nouveau disponible, lorsque la pression du circuit hydraulique principal diminue. Les fonctions principales d'utilisation sont utilisatrices de puissance et comprennent l'actionnement de l'ensemble des organes et des différents outils hydrauliques du véhicule. De cette manière, on coupe la consommation d'énergie liée à la climatisation.

De préférence, la vitesse de rotation du moteur hydraulique peut être régulée automatiquement par une valve hydraulique électro-proportionnelle ou un pressostat de fermeture sensible à la pression. La valve hydraulique électro-proportionnelle ou le pressostat de fermeture peut être positionnée entre le moteur hydraulique et une valve marche-arrêt du moteur hydraulique. Par la fermeture de cette valve aux pressions élevées, il y a restitution du débit pour des fonctions principales d'utilisation.

De manière particulièrement favorable, la pression peut être mesurée à la sortie d'une pompe principale ou des pompes principales de mise sous pression du circuit hydraulique principal sous pression. La pression peut être mesurée en un point situé entre la ou les pompes principales et le distributeur hydraulique servant à répartir un fluide hydraulique pour différentes fonctions principales d'utilisation. La pression peut être préférentiellement mesurée par un capteur hydraulique ou un pressostat sur bloc relié par une prise sur le circuit hydraulique principal sous pression.

Conformément à un deuxième aspect de l'invention, un véhicule à moteur est équipé d'un dispositif de climatisation tel que décrit ci-dessus.

Conformément à un troisième aspect de l'invention, un engin de travaux publics est équipé d'un dispositif de climatisation tel que décrit ci-dessus, qui est monté soit sur le toit de la cabine, soit sous le capot du moteur à combustion interne, soit dans l'habitacle.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :

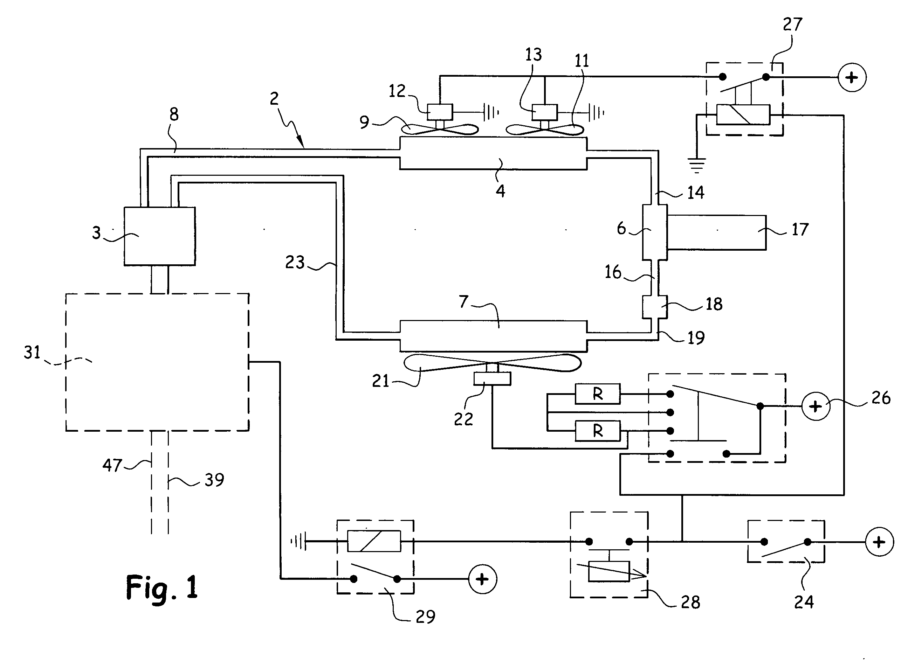

- la Figure 1 représente un schéma simplifié du dispositif de climatisation ;
- la Figure 2 représente un schéma simplifié des moyens d'entraînement et de régulation du dispositif de climatisation ;
- la Figure 3 représente un diagramme montrant l'absence de régulation du circuit hydraulique principal selon l'état de la technique ; et
- la Figure 4 représente un diagramme montrant la régulation du circuit hydraulique principal.

### Description détaillée

Dans un engin de travaux publics, un dispositif de climatisation (1) comprend un circuit de climatisation à fluide réfrigérant (2) rempli d'un gaz frigorigène. Une climatisation de ce type présente une puissance comprise entre 3,5 kW et 5 kW, c'est-à-dire de 20 % à 30 % de la puissance du moteur principal à combustion interne de l'engin de travaux publics.

Le circuit de climatisation (2) comprend un compresseur (3), un condenseur (4), un détendeur (6) également appelé capillaire et un évaporateur (7). Ces éléments sont reliés entre eux par des tuyauteries frigorifiques de différents diamètres, variant en fonction des puissances et de la partie de circuit concernée.

Lorsque le compresseur (3) tourne à une vitesse par exemple de l'ordre de 2500 t/min, le gaz frigorigène est aspiré, comprimé et envoyé sous pression par une tubulure (8) vers le condenseur (4). Dans le condenseur (4) servant de puits de chaleur, le gaz frigorigène se condense sous l'effet d'un refroidissement brutal et devient liquide. Il dégage de la chaleur rejetée vers l'extérieur par l'intermédiaire d'ailettes de refroidissement et de deux ventilateurs (9 et 11) actionnés chacun respectivement par un moteur électrique (12 et 13).

Une tubulure (14) amène le gaz frigorigène liquide jusqu'au détendeur (6). A la sortie du détendeur (6), ce gaz frigorigène liquide est détendu. Dans la tubulure (16), le gaz frigorigène liquide est sous basse pression et se transforme en brouillard. Un filtre sécheur (17) permet de déshydrater le gaz frigorigène. Une vanne d'étranglement (18) sert à maîtriser la quantité de gaz frigorigène qui doit entrer dans le serpentin de l'évaporateur (7).

Le brouillard de gaz frigorigène arrive ensuite par une tubulure (19) dans l'évaporateur (7) servant de source de froid. A ce niveau, le brouillard de gaz frigorigène prend l'énergie disponible en surface de l'échangeur-évaporateur (7), c'est-à-dire la chaleur prise dans l'habitacle de l'engin de travaux public. Avec cela, le brouillard de gaz frigorigène se vaporise et redevient un gaz. Une soufflerie (21) actionnée par un moteur électrique (22) propulse l'air chaud de l'habitacle sur l'échangeur de l'évaporateur (7). De l'autre côté de l'évaporateur (7), l'air ressort ainsi avec beaucoup moins d'énergie. C'est de l'air frais pour l'utilisateur.

Par une tubulure (23), gaz frigorigène retourne au compresseur (3) qui l'aspire en continu. Le cycle décrit ci-dessus peut ainsi recommencer.

Lorsque l'utilisateur a besoin d'air frais, il met en marche le dispositif de climatisation en appuyant sur un interrupteur marche-arrêt (24). Grâce à une commande de vitesse de soufflerie, par exemple de type bouton rotatif à trois positions (26), l'utilisateur règle la vitesse du moteur d'entraînement (22) de la soufflerie (21) amenant de l'air frais à l'habitacle.

Un relais (27) connecté électriquement à l'interrupteur marche-arrêt (24) permet de mettre en route les deux moteurs (12 et 13) faisant tourner les deux ventilateurs (9 et 11) d'expulsion d'air chaud.

Un thermostat (28) permet de garder une température constante à l'intérieur de l'habitacle. Le thermostat (28) est relié en série à un relais (29) qui va permettre la mise en route et l'arrêt du compresseur (3) par l'intermédiaire des moyens d'entraînement et de régulation de vitesse (31) du compresseur (3).

Les moyens d'entraînement et de régulation de vitesse (31) du compresseur (3) comprennent un moteur hydraulique (32) qui entraîne mécaniquement le compresseur (3). Le moteur hydraulique (32) est alimentée en fluide à haute pression par un circuit hydraulique principal sous-pression (33).

Le circuit hydraulique principal sous-pression (33) est mis sous pression grâce à une pompe hydraulique principale (34). Il est à noter que certains engins de travaux publics présentent de deux à cinq pompes mises en série, qui sont chargées de générer la pression du circuit hydraulique principal (33). La pompe principale (34) est entraînée mécaniquement par un moteur à combustion interne (36), de type Diesel, par exemple d'une puissance comprise entre 13 ch et 34 ch.

Le circuit hydraulique principal sous-pression (33) comprend un conduit sous-pression (37), un distributeur (38) et un réservoir (39). Le distributeur (38) permet de connecter au conduit sous-pression (37) plusieurs lignes sous-pression permettant de répartir et d'utiliser la pression pour différentes fonctions principales d'utilisation. Dans le cas d'un engin de travaux public de type mini-pelle mécanique, les fonctions principales d'utilisation sont à titre d'exemple : actionnement de la lame avant (41), première translation de la mini pelle (42), seconde translation de la mini pelle (43), actionnement du godet (44), actionnement du bras (46) et climatisation (47).

Une valve ON/OFF de marche-arrêt (48) est intercalée sur la ligne réservée à la climatisation (47) entre le distributeur (38) et le moteur hydraulique (32) d'entraînement mécanique du compresseur (3). La valve ON/OFF (48) est une valve à commande électrique connectée électriquement au relais (29), qui permet la mise en route et l'arrêt du compresseur (3).

Conformément à l'invention, une deuxième valve de régulation (49) est intercalée sur la ligne réservée à la climatisation (47), entre la valve ON/OFF (48) et le moteur hydraulique (32) d'entraînement mécanique du compresseur (3). Par la valve de régulation (49), le débit d'alimentation (Q) du moteur hydraulique (32) va pouvoir varier, ce qui va accroître ou diminuer sa vitesse de rotation et accroître ou diminuer la vitesse de rotation du compresseur (3), donnant une puissance de climatisation variable.

La deuxième valve de régulation (49) est sensible à la pression (P) régnant dans le circuit hydraulique principal sous pression (33). Cette deuxième valve de régulation (49) est une valve hydraulique électro-proportionnelle de fermeture ou équivalent.

Par la fermeture progressive de cette deuxième valve (49), du débit est restitué pour les fonctions principales de la mini-pelle mécanique, c'est-à-dire aux différentes fonctions principales d'utilisation (41, 42, 43, 44 et 46). Ainsi, lorsque l'utilisateur a besoin de toute la puissance de son engin de travaux publics pour des fonctions principales d'utilisation, pendant le travail, la pression (P) augmente dans le circuit hydraulique principal sous pression (33), et ainsi le dispositif de climatisation (1) est ralenti, puis s'arrête. Le dispositif de climatisation (1) redémarre dès que la puissance est à nouveau disponible, c'est-à-dire lorsque la pression (P) diminue dans le circuit hydraulique principal sous pression (33). D'autres valves (49) peuvent être également envisagées, par exemple de type distributeur by-pass.

Pour prendre l'information de pression (P) régnant dans le circuit hydraulique principal sous pression (33) et l'amener à la valve hydraulique électro-proportionnelle de fermeture (49), un capteur de pression (51) est monté entre la pompe hydraulique principale (34) et le distributeur (38). Une ligne (52) connecte électriquement le capteur de pression (51) à la valve hydraulique électro-proportionnelle de fermeture (49). Le capteur de pression (51) se présente sous la forme d'un capteur hydraulique sur bloc relié par une prise type Minimès® au circuit hydraulique principal sous pression (33).

On notera que dans le cas où il y a plusieurs pompes hydrauliques dites « principales » (34), l'information de pression est également prise sur la somme des pressions représentative des puissances utilisées.

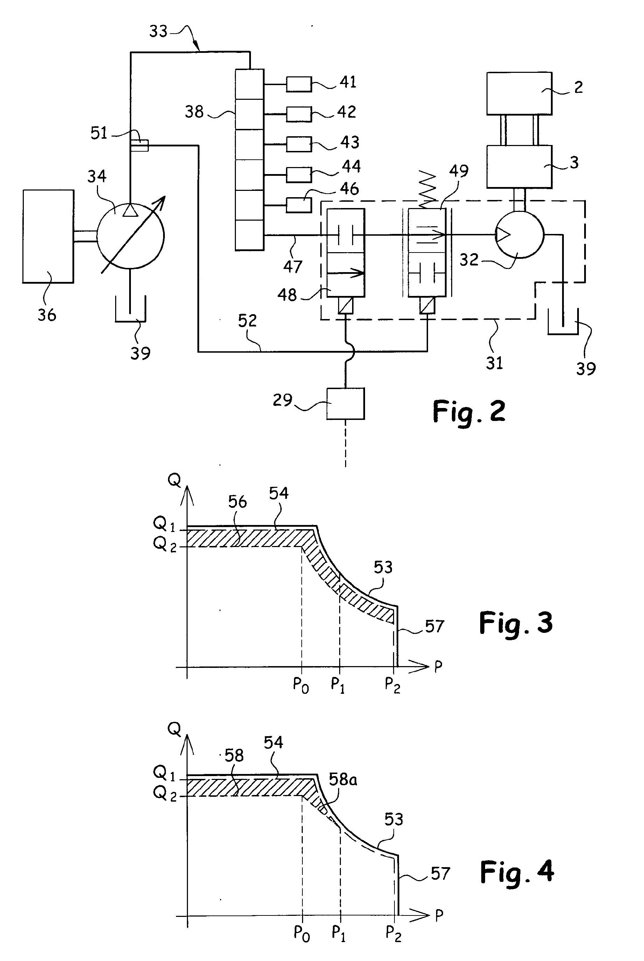

Les Figures 3 et 4 montrent des courbes donnant le débit (Q) en fonction de la pression (P), démontrant ainsi le principe de régulation d'un circuit hydraulique principal d'une mini-pelle et la courbe de puissance disponible du moteur à combustion interne.

La Figure 3 montre, en trait continu, une courbe de puissance du moteur à combustion interne (53). La Figure 3 montre également, en traits pointillés grossiers, une courbe de puissance hydraulique globale sans climatisation (54). Et la Figure 3 montre enfin, en traits pointillés fins, une courbe de puissance hydraulique avec climatisation non régulée (56). A une valeur de pression maximale (P₂), la chute brutale (57) de débit (Q) jusqu'à une valeur nulle, correspond à la zone de perte d'efficacité au travail.

La différence de débit (Q) entre la courbe de puissance du moteur à combustion interne (53) et la courbe de puissance hydraulique globale sans climatisation (54) correspond au rendement des composants hydrauliques. La différence de débit (Q) entre la courbe de puissance hydraulique (54) et la courbe de puissance hydraulique avec climatisation non régulée (56), dans la zone hachurée, correspond à la valeur du débit d'alimentation du moteur hydraulique (32) d'entraînement du compresseur (3). Au palier, cette différence se fait entre la valeur (Q₂), par exemple sensiblement égale à 40 1/min, et la valeur (Q₁), par exemple sensiblement égale à 30 1/min.

La Figure 4 montre, en trait continu, la courbe de puissance du moteur à combustion interne (53). La Figure 4 montre également, en traits pointillés grossiers, la courbe de puissance hydraulique globale sans climatisation (54). Et la Figure 3 montre enfin, en traits pointillés fins, une courbe de puissance hydraulique avec climatisation régulée conformément à l'invention (58).

On constate que la deuxième partie (58a) de la courbe de puissance hydraulique avec climatisation régulée conformément à l'invention (58) rejoint la courbe de puissance hydraulique globale sans climatisation (54). Cette deuxième partie (58a) qui s'établit entre la valeur de pression seuil (P₀), par exemple sensiblement égale à 130 bars, et la deuxième valeur de pression (P₁), par exemple sensiblement égale à 160 bars, constitue l'effet du principe de régulation qui permet de restituer du débit (Q) et de recouvrir la courbe de puissance hydraulique (54) sans climatisation. La partie de la courbe de puissance hydraulique (54), ou de la courbe de puissance du moteur à combustion interne (53), comprise entre la deuxième valeur de pression (P₁), par exemple sensiblement égale à 160 bars, et la valeur de pression maximale (P₂), par exemple sensiblement égale à 210 bars, représente la phase de travail la plus difficile pour la mini-pelle.

L'installation du dispositif de climatisation (1) se fait sur le toit de la cabine de l'utilisateur, dans un ensemble à forme aérodynamique. Seuls deux flexibles hydrauliques sont nécessaires pour relier la source de puissance hydraulique (34) au dispositif (1). Le dispositif de climatisation (1) pourra également être monté sous ou sur le capot du véhicule. Ceci permet de réutiliser le circuit de ventilation et de chauffage pour une meilleure efficacité aux effets de serre. Le dispositif de climatisation (1) pourra également être monté dans l'habitacle.

Le dispositif de climatisation (1) est adaptable sur tous types de véhicules à moteur. Sont plus particulièrement concernés par le dispositif de climatisation, les engins de travaux publics, tels les mini-pelles, les pelles hydrauliques, les chargeuses, les chargeuses pelleteuses, les mini-chargeuses... D'autres véhicules industriels peuvent être équipés du dispositif de climatisation (1), tels les poids lourds, les véhicules utilitaires, les camions bennes à ordures, les balayeuses de ville, les engins de manutention de type chariots élévateurs... Enfin, les engins employés en agriculture et en viticulture peuvent être équipés du dispositif de climatisation (1), tels les tracteurs, les moissonneuses batteuses, les tracteurs enjambeurs, les tracteurs pulvérisateurs, les machines à vendanger...

La présente invention n'est pas limitée aux modes de réalisation décrits et illustrés. De nombreuses modifications peuvent être réalisées, sans pour autant sortir du cadre défini par la portée du jeu de revendications.

## Revendications

1. Dispositif de climatisation comprenant un circuit de fluide réfrigérant (2) présentant notamment un compresseur (3), le compresseur (3) étant mécaniquement entraîné par un moteur hydraulique (32), le moteur hydraulique (32) étant mis en rotation grâce à un circuit hydraulique principal sous-pression (33), le débit d'alimentation (Q) du moteur hydraulique (32) étant régulé en fonction de la pression (P) régnant au sein du circuit hydraulique principal sous pression (33), **caractérisé en ce que** le débit d'alimentation (Q) du moteur hydraulique (32) diminue, lorsque la pression (P) régnant au sein du circuit hydraulique principal sous pression (33) augmente au-delà d'une valeur de pression seuil (P₀), et **en ce que** le débit d'alimentation (Q) du moteur hydraulique (32) augmente, lorsque la pression (P) régnant au sein du circuit hydraulique principal sous pression (33) diminue en dessous d'une deuxième valeur de pression (P₁) supérieure à la valeur de pression seuil (P₀).

2. Dispositif selon la revendication 1, **caractérisé en ce que** la vitesse de rotation du moteur hydraulique (32) est régulée automatiquement par une valve électro-proportionnelle ou un pressostat de fermeture (49) sensible à la pression (P).

3. Dispositif selon la revendication 2, **caractérisé en ce que** la valve électro-proportionnelle ou le pressostat de fermeture (49) est positionnée entre le moteur hydraulique (32) et une valve marche-arrêt (48) du moteur hydraulique (32).

4. Dispositif selon l'une des revendications précédentes, **caractérisé en ce que** la pression (P) est mesurée à la sortie d'une pompe principale (34) ou des pompes principales de mise sous pression du circuit hydraulique principal sous pression (33).

5. Dispositif selon la revendication 4, **caractérisé en ce que** la pression (P) est mesurée en un point situé entre la ou les pompes principales (34) et un distributeur hydraulique (38) servant à répartir un fluide hydraulique pour différentes fonctions principales d'utilisation (41, 42, 43, 44, 46, 47).

6. Dispositif selon la revendication 4 ou 5, **caractérisé en ce que** la pression (P) est mesurée par un capteur hydraulique (51) ou un pressostat sur bloc relié par une prise sur le circuit hydraulique principal sous pression (33).

7. Véhicule à moteur, **caractérisé en ce qu'**il est équipé d'un dispositif de climatisation (1) selon l'une des revendications précédentes.

8. Engin de travaux publics **caractérisé en ce qu'**il est équipé d'un dispositif de climatisation (1) selon l'une des revendications 1 à 6, monté sur le toit de la cabine, ou sous le capot, ou dans l'habitacle.
